# EUROPÄISCHE PATENTSCHRIFT

(11) **EP 3 315 024 B1**
(45) Veröffentlichungstag und Bekanntmachung des Hinweises auf die Patenterteilung: **24.03.2021**
(21) Anmeldenummer: 17196678.1
(22) Anmeldetag: 16.10.2017
(51) Int. Cl.: A01K 63/10, A01K 63/04, E02F 5/28, E04H 4/16

(54) **REINIGUNGSVORRICHTUNG FÜR TEICHE**
CLEANING DEVICE FOR PONDS
DISPOSITIF DE NETTOYAGE POUR ÉTANGS

(30) Priorität: 25.10.2016 DE 102016120351
(43) Veröffentlichungstag der Anmeldung: 02.05.2018
(73) Patentinhaber: OASE GmbH, 48477 Hörstel-Riesenbeck (DE)
(72) Erfinder: Hanke, Andreas, 49088 Osnabrück (DE)
(74) Vertreter: Engelmann, Kristiana

(56) Entgegenhaltungen:
- DE-A1- 4 419 127
- DE-C2- 4 400 505
- US-A- 3 758 276

## Beschreibung

Teiche sollten, insbesondere wenn sie als stehende Gewässer konzipiert sind, regelmäßig gereinigt werden, um Eintrübungen, Sedimentablagerungen und Algenwachstum in Grenzen zu halten. In der Praxis sind zur Teichreinigung Teichfilter zum Herausfiltern von Schwebstoffen, Oberflächenabsauger - sogenannte Skimmer - zum Absaugen und Abfiltern von schwimmenden Verunreinigungen wie beispielsweise Blättern und ergänzend Schlammsauger benannt, mit denen in Intervallen sich am Teichboden als Schlamm absetzende Sedimente abgesaugt und entfernt werden können.

Während die Reinigung über Filter und Skimmer weitestgehend selbsttätig erfolgt, werden Schlammsauger in der Regel bedarfsabhängig in Intervallen verwendet und zwar pumpmotorisch angetrieben, jedoch von Hand geführt.

Aus der DE 44 00 505 C2 ist ein schwimmendes Reinigungsgerät für Gewässer bekannt, bei dem Bodenschlamm dem Gewässer entnommen und mit Sauerstoff versetzt wird. Das Reinigungsgerät ist dabei in Fahrrichtung und Fahrgeschwindigkeit einstellbar. Die DE 44 19 127 A1 offenbart eine schwimmende Vorrichtung, die zur Aufnahme und zur Belüftung von Wasser ausgebildet ist. Die Vorrichtung wird mittels des durch die Vorrichtung strömenden Wassers in Bewegung versetzt. In der US 3,758,276 ist ein Schwimmkörper mit einer Vielzahl von flexiblen Schläuchen offenbart, mithilfe derer Luft in ein Gewässer abgegeben wird, wobei sich die Schläuche unkontrolliert nach dem Zufallsprinzip bewegen.

Der Erfindung liegt die Aufgabe zugrunde, eine Teichreinigung zu vereinfachen. Diese Aufgabe wird erfindungsgemäß durch eine Reinigungsvorrichtung mit den Merkmalen des Anspruchs 1 gelöst.

Durch den Einsatz eines Sedimentaufwirblers in der vorgeschlagenen Reinigungsvorrichtung werden mittels eines angesaugten Verwirbelungsmediums - vorzugsweise Wasser aus dem Teich selbst aber auch beispielsweise Luft - und die Abgabe des Verwirbelungsmediums über einen Ausstoßkanal bzw. Auslass im Bereich sedimentierter Feststoffe, d.h. in der Regel am Teichgrund, die Sedimente aufgewirbelt, so dass sich diese in den Einwirkungsbereich des Filters bewegen und von diesem herausgefiltert werden können. Dadurch wird die Effektivität des Teichfilters erhöht, und der Abstand zwischen den notwendigen Einsätzen eines Schlammsaugers kann vergrößert werden.

Erfindungsgemäß ist ein in tiefe Bereiche des Teiches vordringender Ausstoßkanal vorgesehen, der teleskopierend längenvariabel ausgebildet ist. Dabei ist das untere Ende des Ausstoßkanals von seinem Gewicht her so austariert, dass es durch den Ausstoßdruck des Verwirbelungsmediums vom Teichboden beabstandet ist. So kann eine gleichbleibende Arbeitshöhe zur optimalen Sedimentaufwirbelung erreicht werden.

Mit Vorteil kann mit dem Ausstoßkanal des Sedimentaufwirblers eine Luftansaugung verbunden sein. Wenn als Verwirbelungsmedium Wasser angesaugt wird, benötigt man für die Luftansaugung keinen weiteren Antrieb, da diese über das Ejektorprinzip gewährleistet werden kann. Das angesaugte Wasser sorgt in Verbindung mit der zusätzlich angesaugten Luft für eine bessere Sedimentaufwirbelung und für eine Sauerstoffanreichung im Gewässer.

Der Sedimentaufwirbler kann bevorzugt zumindest einen Schwimmkörper aufweisen, über den er selbsttragend an der Wasseroberfläche schwimmen kann. Je nach Teichgröße kann es ebenfalls sinnvoll sein, wenn der Sedimentaufwirbler beweglich gelagert ist, um verschiedene Teichbereiche bearbeiten zu können. Dazu kann der Sedimentaufwirbler einen Bewegungsantrieb und ggf. einen Richtungsgeber aufweisen, wenn er gezielt in bestimmte Richtungen des Teiches bewegt werden soll. Sofern der Sedimentaufwirbler einen im Wesentlichen runden Außenumfang haben sollte, ist es sinnvoll, dass dieser über zumindest einen Kiel bzw. ein Schwert verfügt, damit er sich nicht ausschließlich um eine eigene Achse dreht.

Der Bewegungsantrieb kann auf einfache Weise verwirklicht werden, indem ein bzw. der Ausstoßkanal nicht senkrecht nach unten, sondern abgewinkelt (mit einer horizontalen Richtungskomponente) ausgebildet ist, so dass er durch das dort abgegebene Verwirbelungsmedium als Rückstoßantrieb wirkt. Wenn die Bewegungsrichtung des Sedimentaufwirblers gezielt beeinflussbar sein soll, ist es dabei von Vorteil, wenn der abgewinkelte Ausstoßkanal motorisch verstellbar ist derart, dass sich die Richtung, in die das Verwirbelungsmedium abgegeben wird, im Verhältnis zur Befestigung am Sedimentaufwirbler verändern lässt.

Eine besonders vorteilhafte Ausführungsform weist zumindest zwei Ausstoßkanäle unterschiedlicher Länge bzw. unterschiedlicher Reichweiten im Teich auf. Insbesondere kann dadurch ein längerer Ausstoßkanal in tiefere Regionen des Teichs vordringen, während ein kürzerer Ausstoßkanal Sedimente in den flacheren, meist Randbereichen des Teichs aufwirbelt.

Die Pumpe des Sedimentaufwirblers ist bevorzugt elektromotorisch angetrieben, wozu eine Energieversorgung vorgesehen ist. Es ist möglich, diese Energieversorgung kabelgebunden zur Verfügung zu stellen, wobei der Sedimentaufwirbler mittels dieses Kabels gleichzeitig am Boden verankert werden kann, wodurch auch sein Aktionsradius festgelegt ist. Da bei einer derartigen Festlegung des Sedimentaufwirblers jedoch im Teich keine filamentartigen Fremdkörper vorhanden sein dürfen, beispielsweise keine Seerosen, ist für viele Einsatzzwecke ein Akkumulator als Energieversorgung vorzuziehen. Dieser ermöglicht es, dass sich der Sedimentaufwirbler frei im Teich bewegen kann, ohne sich mit einem Anker, Kabel oder dergleichen verfangen zu können.

Bevorzugt ist es vorgesehen, dass der Sedementaufwirbler eine Sender-Empfängereinheit für drahtlose Kommunikationsmittel mit einer Steuereinheit aufweist. Dies können beispielsweise Funk, Bluetooth®, ZigBee®, WLAN, Schallwellen oder Infrarot sein. Insbesondere eine Funkfernsteuerung und eine zusätzliche Zeitsteuerung werden hier bevorzugt eingesetzt, so dass die Reinigungsvorrichtung mit dem Sedimentaufwirbler als Teichroboter weitestgehend automatisch arbeitet. Mittels der Zeitsteuerung kann beispielsweise eingestellt werden, dass der Sedimentaufwirbler nur nachts arbeitet. So können sich nicht abgefilterte Schwebstoffe nach Beendigung der Aufwirbelung wieder absetzen, damit das Wasser tagsüber klar ist.

Der Sedimentaufwirbler kann weiterhin bevorzugt Ortsbestimmungsmittel wie beispielsweise GPS oder andere Positionierungsstandards aufweisen, damit stets die aktuelle Position des Sedimentaufwirblers überwacht werden kann. In Kombination mit dem vorbeschriebenen Bewegungsantrieb können diese Ortsbestimmungsmittel zusammen mit einer Auswerteeinheit für Positionsinformationen zu einer Navigation verbunden werden, wodurch der Sedimentaufwirbler sich nicht nur zufallsgesteuert auf dem Teich bewegen, sondern gezielt zu bestimmten Positionen verfahren werden kann.

Vorteilhaft ist es ebenfalls, eine Ladestation vorzusehen, die dauerhaft oder insbesondere nur temporär mit dem Sedimentaufwirbler verbindbar ist, damit sich ein in dem Sedimentaufwirbler befindlicher Akkumulator regelmäßig wieder aufladen kann. Insbesondere in Zusammenwirkung mit den drahtlosen Kommunikationsmitteln und der Auswerteeinheit für Positionsinformationen sowie dem Bewegungsantrieb kann die Ladestation aktiv und gezielt angefahren werden, wenn der Sedimentaufwirbler nicht im Betrieb ist und/oder der Akkumulator eine Aufladung benötigt.

Die erfindungsgemäße Reinigungsvorrichtung kann mit den bevorzugt vorgesehenen Merkmalen ausgestattet als vollautomatischer Teichroboter genutzt werden, wodurch sich die Filterleistung des Teichfilters erheblich erhöhen und die Intervalle der Schlammsaugung zur Sedimententfernung deutlich vergrößern lassen, so dass der Personalaufwand zur Teichpflege insgesamt stark herabgesetzt wird.

Weitere Vorteile und Einzelheiten ergeben sich aus den Ansprüchen sowie einem in den Zeichnungen dargestellten Ausführungsbeispiel der Erfindung, das im Folgenden erläutert wird; es zeigen:
- Fig. 1.: schematisch die erfindungsgemäße Reinigungsvorrichtung im Einsatz,
- Fig. 2.: eine vergrößerte Darstellung der Reinigungsvorrichtung aus Fig. 1 und
- Fig. 3.: einen Vertikalschnitt durch den Gegenstand aus Fig. 2.

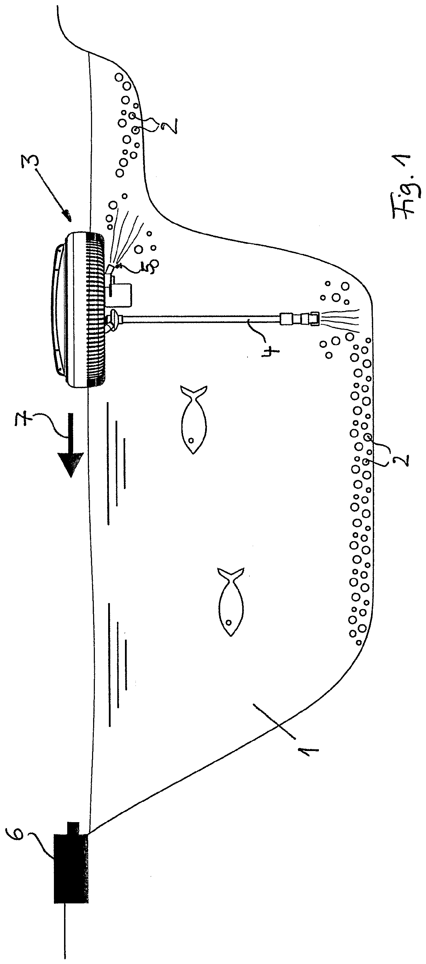

In der in Fig. 1 dargestellten Situation ist ein Teich 1 abgebildet, in dessen Bodenbereichen sich Sedimente 2 abgelagert haben. An der Wasseroberfläche schwimmt ein Sedimentaufwirbler 3 für Teiche. Die Abbildung ist nur schematisch und nicht maßstabgetreu. Im Normalfall wird der Teich 1 im Verhältnis zum Sedimentaufwirbler 3 erheblich größer sein als hier abgebildet. Der Sedimentaufwirbler 3 saugt ein Verwirbelungsmedium - hier ein Teichwasser-Luftgemisch - an und gibt dieses über Ausstoßkanäle 4,5 im Bereich der sedimentierten Feststoffe 2, auch Mulm genannt, wieder ab. Für die grundsätzliche Funktion des Sedimentaufwirblers 3 ist ein Ausstoßkanal 4 oder 5 ausreichend. Die hier abgebildete Ausführungsform verfügt jedoch über einen Ausstoßkanal 4, der über ein bevorzugt teilflexibles Rohr oder z.B. einen Schlauch in tiefere Bereiche des Teiches vordringt, während der Ausstoßkanal 5 so gerichtet ist, dass er Sedimente 2 in flacheren und Randbereichen des Teiches aufwirbelt. Die durch das Verwirbelungsmedium aufgewirbelten Feststoffe 2 können sodann von einem hier nicht dargestellten Filter aus dem Teichwasser herausgefiltert werden.

Bei dem in Fig. 1 abgebildeten Sedimentaufwirbler handelt es sich um eine nicht kabelgebundene Ausführungsform. Diese verfügt über Akkumulatoren, die an einer Ladestation 6 bevorzugt im Teichrandbereich bei Bedarf wieder aufgeladen werden können. Ein Pfeil 7 deutet die Bewegungsrichtung des Sedimentaufwirblers 3 zur Ladestation an, die durch die Ausstoßrichtung des zweiten Ausstoßkanals 5 eingeleitet werden kann. Die Ladestation 6 ist bevorzugt ebenfalls zumindest teilweise beweglich gelagert, z.B. schwimmend, um sich dem Wasserstand anpassen zu können.

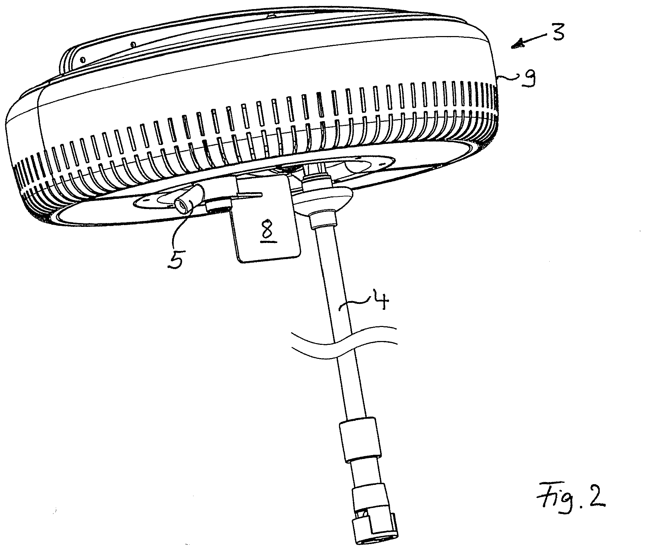

Fig. 2 zeigt den Sedimentaufwirbler 3 in perspektivischer Darstellung leicht von unten. Dort ist insbesondere erkennbar, dass der zweite Ausstoßkanal 5 an seiner gegenüberliegenden Seite mit einem Ruder 8 verbunden ist. Dadurch und durch die leicht schräg abgewinkelte Anordnung des Ausstoßkanals 5 wirkt dieser als Rückstoßantrieb mit dem Ruder 8 als Richtungsgeber, so dass auch ein wie hier mit rundem Außenumfang ausgebildeter Sedimentaufwirbler 3 sich nicht willkürlich drehend, sondern gerichtet fortbewegt. Dies könnte alternativ auch über eine an der Unterseite des Sedimentaufwirblers 3 angeordnete Finne bzw. ein Schwert erreicht werden.

Der Ausstoßkanal 4 ist in Fig. 2 in seiner Länge unterbrochen dargestellt und in der Praxis erheblich länger als hier abgebildet. Der Ausstoßkanal 4 wird teleskopierend längenvariabel ausgebildet.

Wenn das untere Ende des Ausstoßkanals 4 von seinem Gewicht her so austariert ist, dass es durch den Ausstoßdruck des Verwirbelungsmediums vom Teichboden beabstandet ist, kann so eine gleichbleibende Arbeitshöhe zur optimalen Sedimentaufwirbelung erreicht werden. Das untere Ende des Ausstoßkanals 4 fungiert so als Gründeldüse.

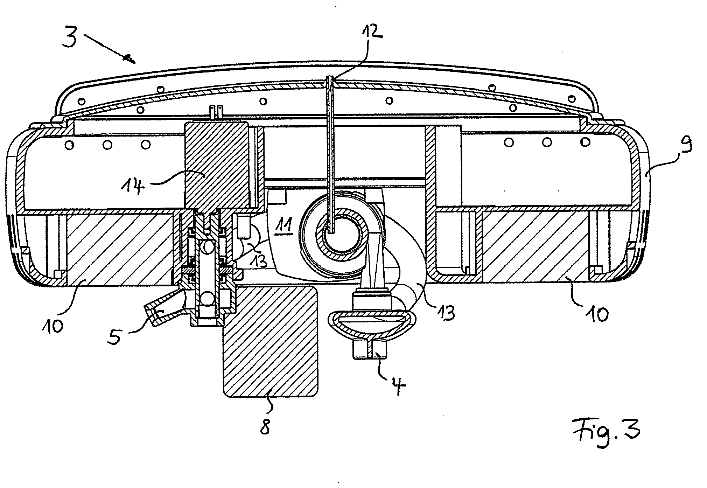

Die Details des Sedimentaufwirblers 3 für Teiche sind insbesondere der Schnittdarstellung in Fig. 3 zu entnehmen. Dort ist erkennbar, dass der Sedimentaufwirbler 3 innerhalb seines Gehäuses 9 über Schwimmkörper 10 verfügt, die die Vorrichtung 3 an der Wasseroberfläche halten. Im Inneren der Vorrichtung 3 befindet sich eine Pumpe 11, die Teichwasser ansaugt und aus den zwei Ausstoßkanälen 4, 5 wieder abgibt. Diesem Teichwasser wird über eine Luftansaugung 12 mittels Venturi-Effekt Luft beigemischt, die die Wirkung des dadurch gebildeten Verwirbelungsmediums erhöht und den Teich gleichzeitig belüftet. Das Verwirbelungsmedium wird dann über die Ausstoßkanäle 4 und 5 wieder abgegeben, wobei in der Darstellung gemäß Fig. 3 der lange untere Bereich des Ausstoßkanals 4 nicht dargestellt ist. Beide Ausstoßkanäle 4, 5 sind über eine Verbindungsleitung 13 miteinander verbunden, so dass beide auch von derselben Pumpe 11 versorgt werden können. Dies ist jedoch nicht zwingend.

Der Ausstoßkanal 5 dient gleichzeitig als Rückstoßantrieb und ist dazu in einen Winkel zwischen 10° und 50°, bevorzugt etwa 30° gegenüber der Waagerechten geneigt angeordnet und wie dargestellt drehbar gelagert. Seine Richtung kann aktiv über einen Bewegungsantrieb 14 mit Motor gesteuert werden. Als Richtungsantrieb fungiert dabei außerdem das Ruder 8.

Im oberen Bereich des Sedimentaufwirblers 3 kann - hier in der Schnittdarstellung nicht gesondert abgebildet - ein Akkumulator zur Energieversorgung von Energieabnehmern wie der Pumpe und des Bewegungsantriebs untergebracht sein sowie ggf. eine Steuerelektronik zur aktiven Steuerung von Pumpe 11 und insbesondere Bewegungsantrieb 14. Über die Steuerung des Bewegungsantriebs 14 kann gezielt die Teichoberfläche abgefahren werden, oder es ist möglich, den Sedimentaufwirbler 3 sich in einem chaotischen System rein zufallsgesteuert bewegen zu lassen.

Bei einem derart vollautomatischen Betrieb der Reinigungsvorrichtung arbeitet der Sedimentaufwirbler 3 als Teichroboter. Auch bei nicht automatisierter Nutzung hat der Sedimentaufwirbler 3 bei kalter Witterung durch seine Bewegung der Teichoberfläche die zusätzliche Funktion eines Eisfreihalters.

## Patentansprüche

1. Reinigungsvorrichtung für Teiche (1) zum Zusammenwirken mit zumindest einem Teichfilter zum Entfernen von Feststoffen (2) aus dem Teich (1), umfassend einen Sedimentaufwirbler (3) mit einer Pumpe (11), die ein Verwirbelungsmedium ansaugt und dieses über zumindest einen Ausstoßkanal (4, 5) im Bereich sedimentierter Feststoffe (2) abgibt, **dadurch gekennzeichnet, dass** die Reinigungsvorrichtung einen Ausstoßkanal (4) umfasst, der in tiefe Bereiche des Teiches (1) vordringt und teleskopierend längenvariabel ausgebildet ist, wobei ein unteres Ende des Ausstoßkanals (4) von seinem Gewicht her so austariert ist, dass es durch den Ausstoßdruck des Verwirbelungsmediums vom Teichboden beabstandet ist, so dass eine gleichbleibende Arbeitshöhe zur optimalen Sedimentaufwirbelung erreicht wird.

2. Reinigungsvorrichtung nach Anspruch 1, **dadurch gekennzeichnet, dass** der Sedimentaufwirbler (3) zumindest einen Schwimmkörper (10) aufweist.

3. Reinigungsvorrichtung nach einem der vorausgehenden Ansprüche, **gekennzeichnet durch** eine mit dem Ausstoßkanal (4, 5) verbundene Luftansaugung (12).

4. Reinigungsvorrichtung nach einem der vorausgehenden Ansprüche, **dadurch gekennzeichnet, dass** der Sedimentaufwirbler (3) beweglich gelagert ist.

5. Reinigungsvorrichtung nach einem der vorausgehenden Ansprüche, **dadurch gekennzeichnet, dass** der Sedimentaufwirbler (3) einen Bewegungsantrieb (14) und ggf. Richtungsgeber (8) aufweist.

6. Reinigungsvorrichtung nach einem der vorausgehenden Ansprüche, **dadurch gekennzeichnet, dass** zumindest ein Ausstoßkanal (5) abgewinkelt, als Rückstoßantrieb wirkend ausgebildet ist.

7. Reinigungsvorrichtung nach Anspruch 6, **dadurch gekennzeichnet, dass** der abgewinkelte Ausstoßkanal (5) zur Richtungsvorgabe motorisch verstellbar ist.

8. Reinigungsvorrichtung nach einem der vorausgehenden Ansprüche, **gekennzeichnet durch** wenigstens zwei Ausstoßkanäle (4, 5) unterschiedlicher Länge bzw. Reichweite.

9. Reinigungsvorrichtung nach einem der vorausgehenden Ansprüche, **dadurch gekennzeichnet, dass** die Pumpe (11) elektromotorisch angetrieben ist und der Sedimentaufwirbler (3) dazu eine Energieversorgung, vorzugsweise als Akkumulator, aufweist.

10. Reinigungsvorrichtung nach einem der vorausgehenden Ansprüche, **dadurch gekennzeichnet, dass** der Sedimentaufwirbler (3) eine Sender-Empfängereinheit aufweist für drahtlose Kommunikationsmittel mit einer Steuereinheit.

11. Reinigungsvorrichtung nach einem der vorausgehenden Ansprüche, **dadurch gekennzeichnet, dass** der Sedimentaufwirbler (3) Ortsbestimmungsmittel aufweist.

12. Reinigungsvorrichtung nach Anspruch 5, Anspruch 11 und ggf. einem der weiteren vorausgehenden Ansprüche, **dadurch gekennzeichnet, dass** der Sedimentaufwirbler (3) eine Auswerteeinheit für Positionsinformationen aufweist, die mit dem Bewegungsantrieb (14) zu einer Navigation verbunden ist.

13. Reinigungsvorrichtung nach einem der vorausgehenden Ansprüche, **gekennzeichnet durch** eine Ladestation (6) mit einer Verbindung zum Sedimentaufwirbler (3).

## Claims

1. Cleaning device for ponds (1) to interact with at least one pond filter in order to remove solids (2) from the pond (1), comprising a sediment swirling device (3) with a pump (11), which sucks in a swirling medium and discharges the swirling medium through at least one ejector channel (4, 5) in the region of sedimented solids (2), **characterised in that** the cleaning device comprises an ejector channel (4), which penetrates into deep regions of the pond (1) and is designed in a telescoping manner so as to be variable in length, wherein a lower end of the ejector channel (4) is balanced with respect to its weight such that it is spaced apart from the bottom of the pond by the ejection pressure of the swirling medium such that a constant working height for optimal sediment swirling is achieved.

2. Cleaning device according to claim 1, **characterised in that** the sediment swirling device (3) has at least one floating body (10).

3. Cleaning device according to any one of the preceding claims, **characterised by** an air intake (12) connected to the ejector channel (4, 5).

4. Cleaning device according to any one of the preceding claims, **characterised in that** the sediment swirling device (3) is movably mounted.

5. Cleaning device according to any one of the preceding claims, **characterised in that** the sediment swirling device (3) has a motion drive (14) and, possibly, a direction sensor (8).

6. Cleaning device according to any one of the preceding claims, **characterised in that** at least one ejector channel (5) is designed angled, acting as a jet force drive.

7. Cleaning device according to claim 6, **characterised in that** the angled ejector channel (5) is adjustable in a motorised manner for direction setting.

8. Cleaning device according to any one of the preceding claims, **characterised by** at least two ejector channels (4, 5) of different length or range.

9. Cleaning device according to any one of the preceding claims, **characterised in that** the pump (11) is driven electromotively and the sediment swirling device (3) has, to this end, an energy supply, preferably as a battery.

10. Cleaning device according to any one of the preceding claims, **characterised in that** the sediment swirling device (3) has a sender receiver unit for wireless communication means with a control unit.

11. Cleaning device according to any one of the preceding claims, **characterised in that** the sediment swirling device (3) has location determination means.

12. Cleaning device according to claim 5, claim 11 and possibly any one of the other preceding claims, **characterised in that** the sediment swirling device (3) has an evaluation unit for position information which is connected with the motion drive (14) to a navigation system.

13. Cleaning device according to any one of the preceding claims, **characterised by** a charging station (6) with a connection to the sediment swirling device (3).

## Revendications

1. Dispositif de nettoyage pour étangs (1) destiné à coopérer avec au moins un filtre pour étang pour enlever des matières solides (2) de l'étang (1), comprenant un tourbillonneur de sédiments (3) avec une pompe (11) qui aspire un milieu tourbillonnant et rejette celui-ci au niveau des matières solides (2) sédimentées par le biais d'au moins un canal d'évacuation (4, 5), **caractérisé en ce que** le dispositif de nettoyage comprend un canal d'évacuation (4) qui avance dans des zones profondes de l'étang (1) et est réalisé de manière télescopique à longueur variable, dans lequel une extrémité inférieure du canal d'évacuation (4) est tarée par son poids de telle sorte qu'elle est éloignée du fond de l'étang par la force d'évacuation du milieu tourbillonnant de manière à obtenir une hauteur de travail constante pour un tourbillonnement optimal des sédiments.

2. Dispositif de nettoyage selon la revendication 1, **caractérisé en ce que** le tourbillonneur de sédiments (3) présente au moins un corps flottant (10).

3. Dispositif de nettoyage selon une des revendications précédentes, **caractérisé par** une aspiration d'air (12) reliée au canal d'évacuation (4, 5).

4. Dispositif de nettoyage selon une des revendications précédentes, **caractérisé en ce que** le tourbillonneur de sédiments (3) est monté mobile.

5. Dispositif de nettoyage selon une des revendications précédentes, **caractérisé en ce que** le tourbillonneur de sédiments (3) présente un entraînement de mouvement (14) et éventuellement un transmetteur de direction (8).

6. Dispositif de nettoyage selon une des revendications précédentes, **caractérisé en ce qu'**au moins un canal d'évacuation (5) est réalisé coudé, agissant sous la forme d'un entraînement par répulsion.

7. Dispositif de nettoyage selon la revendication 6, **caractérisé en ce que** le canal d'évacuation (5) coudé peut être réglé par un moteur pour la détermination de la direction.

8. Dispositif de nettoyage selon une des revendications précédentes, **caractérisé par** au moins deux canaux d'évacuation (4, 5) de longueur ou portée différente.

9. Dispositif de nettoyage selon une des revendications précédentes, **caractérisé en ce que** la pompe (11) est entraînée par un moteur électrique et le tourbillonneur de sédiments (3) présente à cet effet une alimentation en énergie, de préférence sous la forme d'un accumulateur.

10. Dispositif de nettoyage selon une des revendications précédentes, **caractérisé en ce que** le tourbillonneur de sédiments (3) présente une unité d'émetteur/récepteur pour le moyen de communication sans fil avec une unité de commande.

11. Dispositif de nettoyage selon une des revendications précédentes, **caractérisé en ce que** le tourbillonneur de sédiments (3) présente des moyens de localisation.

12. Dispositif de nettoyage selon la revendication 5, la revendication 11 et éventuellement une des autres revendications précédentes, **caractérisé en ce que** le tourbillonneur de sédiments (3) présente une unité d'évaluation des informations de position, laquelle est reliée à un entraînement de mouvement (14) pour la navigation.

13. Dispositif de nettoyage selon une des revendications précédentes, **caractérisé par** une station de charge (6) avec une liaison vers le tourbillonneur de sédiments (3).
